# FASCICULE DE BREVET EUROPEEN

(11) **EP 0 801 839 B1**
(45) Date de publication et mention de la délivrance du brevet: **20.05.1998**
(21) Numéro de dépôt: 95930570.7
(22) Date de dépôt: 11.09.1995
(51) Int. Cl.: H02M 1/12, H02M 7/00

(54) **DISPOSITIONS POUR LA REDUCTION DU CHAMP ELECTROMAGNETIQUE EMIS PAR UN EQUIPEMENT D'ELECTRONIQUE DE PUISSANCE**
VORRICHTUNG ZUR VERMINDERUNG DES VON EINER LEISTUNGSELEKTRONISCHEN ANLAGE AUSGESTRAHLTEN ELEKTROMAGNETISCHEN FELDES
ARRANGEMENTS FOR REDUCING THE ELECTROMAGNETIC FIELD CREATED BY POWER ELECTRONIC EQUIPMENT

(30) Priorité: 13.09.1994 FR 9410904
(43) Date de publication de la demande: 22.10.1997
(73) Titulaire: ALCATEL ALSTHOM COMPAGNIE GENERALE D'ELECTRICITE, 75382 Paris Cédex 08 (FR)
(72) Inventeur: PUZO, Antoine, F-78000 Versailles (FR); GONZALES, Juan, F-78730 Saint-Arnoult-en-Yvelines (FR)
(74) Mandataire: Pothet, Jean Rémy Emile Ludovic
(86) Numéro de dépôt international: FR9501163
(87) Numéro de publication internationale: WO9608863

(56) Documents cités:
- DE-A- 3 835 751
- PATENT ABSTRACTS OF JAPAN vol. 017 no. 528 (E-1437), 22 Septembre 1993 & JP-A-05 145266 (YOKOGAWA ELECTRIC CORP) 11 Juin 1993

## Description

La présente invention concerne des dispositions pour la réduction du champ électomagnétique émis par un équipement d'électronique de puissance.

Un tel équipement d'électronique de puissance, un convertisseur de courant alternatif en courant continu, par exemple, comprend des commutateurs électroniques engendrant un champ électromagnétique qui, en raison des puissance en jeu, est très intense et demande des dispositions pour en réduire la propagation à l'extérieur de l'équipement. Les solutions connues, à cet égard, reposent sur le blindage et le filtrage.

De telles solutions, lorsqu'elles sont appliquées à des équipements relativement peu puissants et peu volumineux, sont efficaces, pour un coût acceptable. Toutefois, avec l'augmentation de la puissance des équipements d'électronique de puissance et donc de leur volume, de telles dispositions tendent à devenir inacceptables, non seulement en termes de coût, mais aussi de volume et de poids, tandis que l'augmentation des vitesses de commutation accroît par ailleurs le niveau des rayonnements émis.

La présente invention a donc pour premier objet des dispositions visant à la réduction du champ électromagnétique émis par un équipement d'électronique de puissance qui soit efficace pour un coût peu élevé, réduisant d'autant les exigences portant sur le filtrage et le blindage, lorsque ceux-ci demeurent nécessaires.

Des dispositions contribuant à la réduction du champ électromagnétique émis par un équipement d'électronique de puissance sont déjà connues par le document de brevet DE-A-3835751. Elles comprennent essentiellement une boucle en court-circuit placée au voisinage d'un conducteur de l'équipement, de manière à en réduire l'inductance. Cette boucle a aussi pour effet absorber l'énergie électromagnétique qui lui parvient par couplage avec le conducteur en question et de réduire l'énergie rayonnée dans l'espace qui les entoure tous les deux.

Selon l'invention, le conducteur rayonnant étant un monopôle (rayonnant essentiellement un champ électrique), l'élément d'antenne est aussi un monopôle formé d'un conducteur de même longueur et de même surface que le conducteur rayonnant, relié à la terre à l'une de ses extrémités.

Additionnellement, lorsque le conducteur rayonnant est une boucle (rayonnant essentiellement un champ magnétique), l'élément d'antenne est aussi une boucle formée d'un conducteur de même parcours, longueur et surface que le conducteur rayonnant.

Les différents objets et caractéristiques de l'invention apparaîtront plus clairement à la lumière de la description qui va suivre d'un exemple de réalisation de l'invention, faite en se référant aux figures annexées qui représentent :
- la figure 1, à titre d'exemple, le schéma de principe d'un hacheur de courant continu que l'on peut employer dans un équipement d'électronique de puissance,
- la figure 2, une illustration de la tension et du courant dans le transistor de commutation T du schéma de la figure 1,
- la figure 3, le même schéma que celui de la figure 1, mais avec indication de monopoles engendrant un champ électrique,
- la figure 4, le même schéma encore, mais avec indications des boucles engendrant un champ magnétique,
- la figure 5, une illustration des dispositions assurant, selon l'invention, dans une premier exemple de mise en oeuvre, une réduction du champ électromagnétique émis par un monopôle rayonnant,
- la figure 6, une illustration des dispositions assurant additionnellement, selon l'invention, une réduction du champ électromagnétique émis par une boucle rayonnante,
- la figure 7, une courbe illustrant des résultats expérimentaux dans le cas des dispositions de la figure 5,
- la figure 8, une courbe illustrant des résultats expérimentaux dans le cas des dispositions de la figure 6.

La présente invention s'applique à la réduction du champ électomagnétique émis par un équipement d'électronique de puissance.

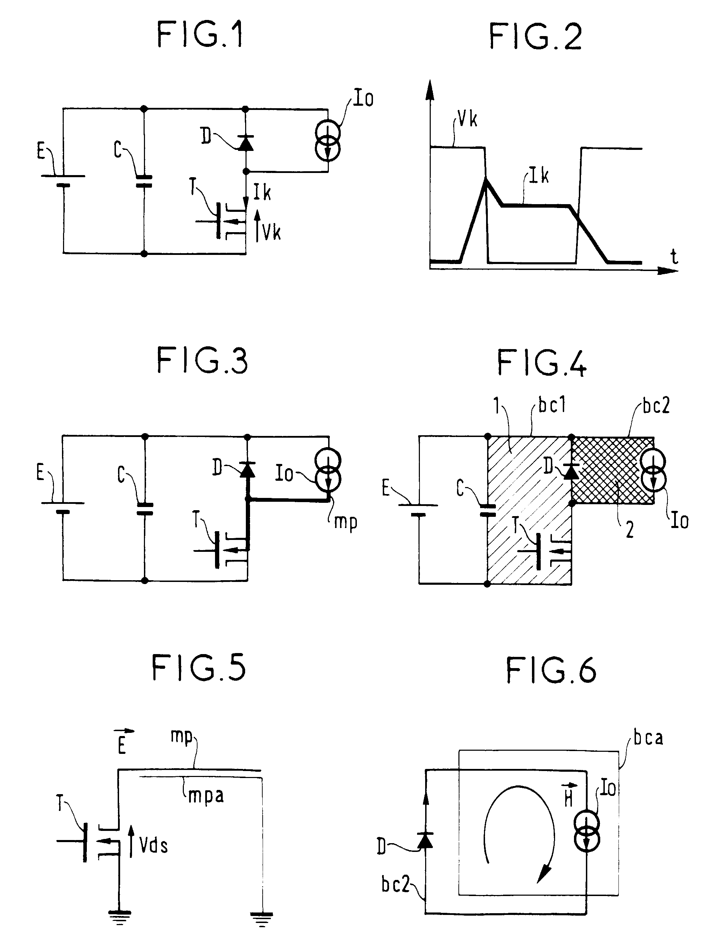

Un tel équipement d'électronique de puissance, un convertisseur de courant alternatif en courant continu, par exemple, comprend des commutateurs électroniques engendrant un champ électromagnétique. Un exemple de tels commutateurs électronique est illustré par la figure 1. Celle-ci représente le schéma de principe d'un hacheur de courant continu comprenant une source de tension continue E (un redresseur, par exemple), un condensateur de filtrage C, un transistor de commutation T, une diode de roue libre D, et une charge représentée comme un générateur de courant IO.

La figure 2, représente, schématiquement, la tension VK aux borne du transistor de commutation T et le courant IK le traversant, pendant chaque période de conduction et de blocage du transistor de commutation T. On y voit que la tension à ses bornes VK tombe soudainement à zéro, tandis que le courant dans la charge IO s'établit. Après la période de conduction du transistor de commutation T, le courant dans ce transistor tombe à zéro, tandis que la tension remonte à la valeur VK voisine de la tension de la source E. Par ailleurs, ce qui n'est pas visible sur la figure, le courant dans la charge IO se maintient à travers la diode de roue libre D.

A chaque variation soudaine de la tension ou du courant dans le circuit de la figure 1, de façon classique une oscillation amortie se produit, sur certains conducteurs, qui donne lieu à émission électromagnétique. L'invention a pour objet de la réduire.

La figure 3 représente le même circuit que la figure 1, dans lequel le conducteur mp joignant le collecteur du transistor T à la diode D et à la charge IO est tracé en trait épais, pour illustrer le fait que ce conducteur mp, soumis à une variation de tension soudaine lors du blocage du transistor de commutation T, se comporte en monopole et émet un rayonnement essentiellement de champ E qui se propage dans toutes les directions de l'espace (dans la réalisation physique, bien sûr, pas selon le schéma). Les autres conducteurs du montage peuvent être ignorés à cet égard, puisqu'ils sont tous à la masse, qu'ils y soient connectés directement ou à travers la source de tension E et le condensateur C qui font à cet égard office de court-circuits.

De façon analogue, la figure 4 représente le même circuit, dans lequel on a matérialisé, l'une avec des hachures simples, l'autre avec des hachures croisées, deux boucles bc1 et bc2 dans lesquelles circulent des courants d'oscillations, lors du fonctionnement du transistor de commutation T, qui donnent lieu à des émissions en champ essentiellement magnétique, qui se propagent dans l'espace autour de ces boucles.

La figure 5 illustre, en reprenant seulement le transistor de commutation T des figures précédentes et une section de conducteur opérant en monopôle rayonnant mp, les dispositions mpa apportées selon l'invention pour la réduction du champ électromagnétique émis par ce monopole.

La figure 6, de façon analogue illustre, en reprenant seulement la diode de roue libre D et la charge IO dans la boucle rayonnante bc2, les dispositions bca apportées selon l'invention pour la réduction du champ électromagnétique émis par cette boucle.
Globalement, ces dispositions, visant à la réduction du champ électromagnétique émis par un équipement d'électronique de puissance, comprennent essentiellement un élément d'antenne placé au voisinage d'un conducteur rayonnant de l'équipement, de manière à absorber l'énergie électromagnétique qui lui parvient par couplage avec le conducteur rayonnant, afin de réduire l'énergie rayonnée dans l'espace qui les entoure tous les deux.

En effet, dans la forme de réalisation de la figure 5, alors que le conducteur rayonnant est un monopôle, l'élément d'antenne mpa est aussi un monopôle formé d'un conducteur de même longueur et de même géométrie que le conducteur rayonnant, relié à la terre à l'une de ses extrémités.

Additionnellement, conformément à la figure 6, lorsque le conducteur rayonnant est une boucle, l'élément d'antenne bca est aussi une boucle formée d'un conducteur de même parcours, longueur et surface que le conducteur rayonnant.

L'élément d'antenne de la figure 5, tout comme celui de la figure 6, couplé électromagnétiquement au conducteur rayonnant, soit un monopôle, soit une boucle, fait office de charge dissipative pour l'énergie couplée, de sorte que le rayonnement produit dans l'espace environnant est fortement réduit.

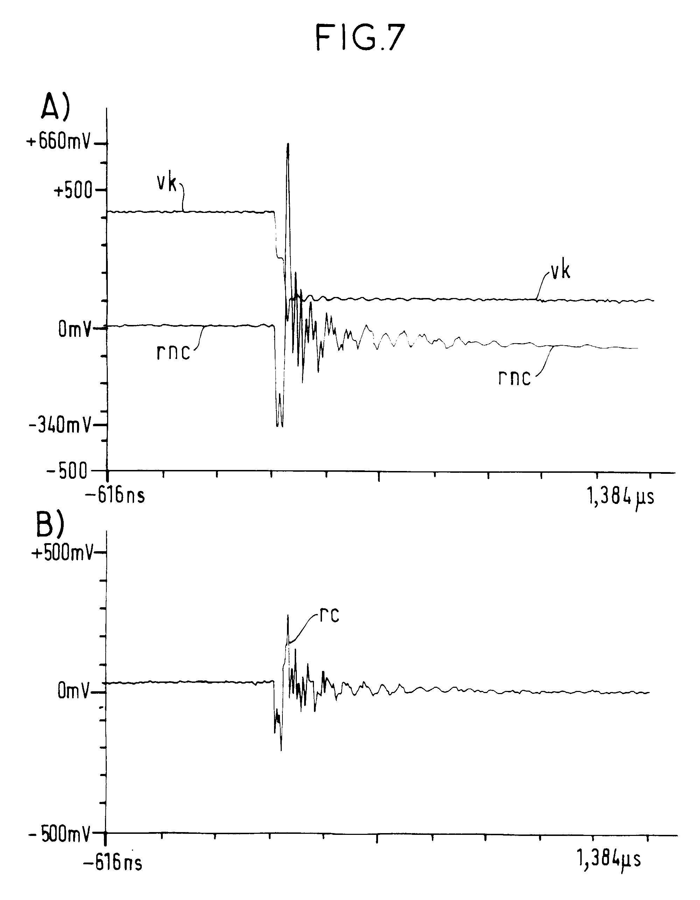

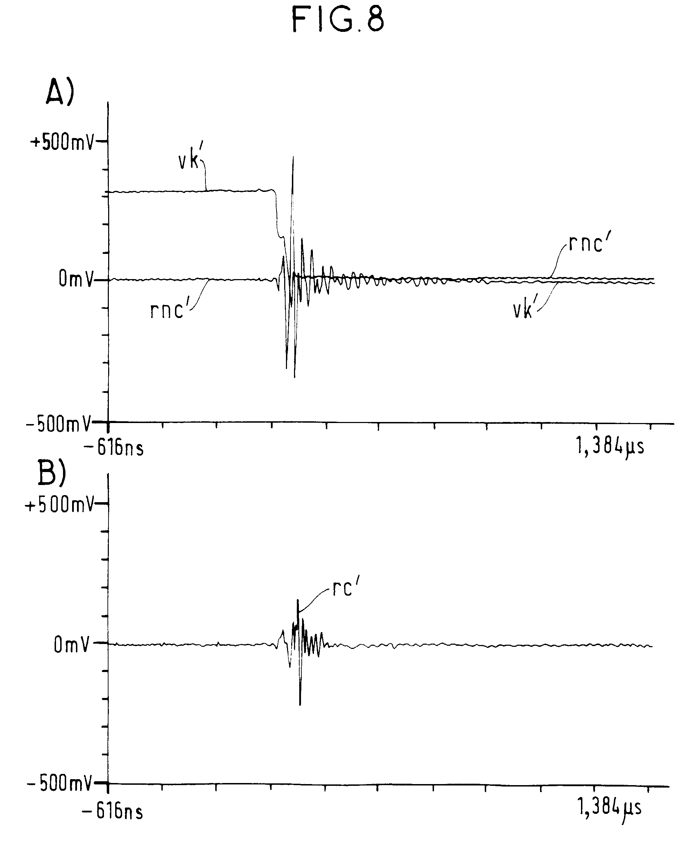

Les figures 7 et 8 illustrent, par des cas pratiques dérivés des représentations des figures 5 et 6, les avantages procurés par l'invention.

La figure 7 représente des tracés d'oscilloscope relevés lors d'essais effectués à l'aide d'un montage conforme à la figure 1, le transistor de commutation T étant du type connu sous l'appelation IGBT, modèle GW20N50, pouvant supporter 500 V et 20 A. Les essais dont le résultat est illustré ont été effectués sous 100 V et 20 A. La charge IO avait une résistance de 4 ohms et une inductance de 2 mH.

On voit sur cette figure, partie A), un tracé vk représentatif de la tension VK aux bornes du transistor de commutation et un tracé rnc, représentatif du champ électrique en l'absence du dispositif de l'invention, ainsi que, partie B), un tracé, relevé dans les mêmes conditions, mais l'élément d'antenne de la figure 5 étant en place. On constate une réduction de moitié du champ émis.

La figure 8 est similaire, mais concerne le cas de la figure 6, les tracés rnc' et rc' étant homologues des tracés rnc et rc de la figure 7, et leur rapport est le même.

## Revendications

1. Dispositions pour la réduction du champ électromagnétique émis par un équipement d'électronique de puissance, alors que le conducteur rayonnant (mp) est un monopôle, caractérisées en ce qu'elles comprennent un élément d'antenne (mpa) qui est aussi un monopôle formé d'un conducteur de même longueur et de même surface que le conducteur rayonnant, relié à la terre à l'une de ses extrémités.

2. Dispositions pour la réduction du champ électromagnétique émis par un équipement d'électronique de puissance conforme à la revendication 1, alors que le conducteur rayonnant (bc1, bc2) est une boucle, caractérisées en ce qu'elles comprennent un élément d'antenne (bca) qui est une boucle formée d'un conducteur de même parcours, longueur et surface que le conducteur rayonnant.

## Patentansprüche

1. Vorrichtungen zur Verringerung des von einer leistungselektronischen Anlage ausgestrahlten elektromagnetischen Feldes, wenn der strahlende Leiter (mp) ein Monopol ist, **dadurch gekennzeichnet**, daß sie ein Antennenelement (mpa) umfassen, das auch ein aus einem Leiter mit gleicher Länge und gleicher Oberfläche wie der strahlende Leiter gebildeter Monopol ist und an einem seiner Enden mit Erde verbunden ist.

2. Vorrichtungen zur Verringerung des von einer leistungselektronischen Anlage ausgestrahlten elektromagnetischen Feldes nach Anspruch 1, wobei der strahlende Leiter (bc1, bc2) eine Schleife ist, dadurch gekennzeichnet, daß sie ein Antennenelement (bca) umfassen, das eine aus einem Leiter mit gleichem Verlauf, gleicher Länge und Oberfläche wie der strahlende Leiter gebildete Schleife ist.

## Claims

1. Arrangements for reducing the electromagnetic field emitted by electronic power equipment, where the radiating conductor (mp) is a monopole, the arrangements being characterized in that they comprise an antenna element (mpa) which is also a monopole formed by a conductor of the same length and the same area as the radiating conductor, and connected to ground at one of its ends.

2. Arrangements according to claim 1, for reducing the electromagnetic field emitted by electronic power equipment where the radiating conductor (bc1, bc2) is a loop, the arrangements being characterized in that they comprise an antenna element (bca) which is a loop formed by a conductor having the same path, the same length, and the same area as the radiating conductor.
